# EUROPÄISCHE PATENTSCHRIFT

(11) **EP 3 466 257 B1**
(45) Veröffentlichungstag und Bekanntmachung des Hinweises auf die Patenterteilung: **10.04.2024**
(21) Anmeldenummer: 18195156.7
(22) Anmeldetag: 18.09.2018
(51) Int. Cl.: A01M 7/00

(54) **LANDWIRTSCHAFTLICHE VERTEILMASCHINE UND VERFAHREN ZUR STEUERUNG EINER DERARTIGEN VERTEILMASCHINE**
AGRICULTURAL DISTRIBUTOR AND METHOD FOR CONTROLLING SUCH A DISTRIBUTOR
MACHINE D'ÉPANDAGE AGRICOLE ET PROCÉDÉ DE COMMANDE D'UNE TELLE MACHINE D'ÉPANDAGE

(30) Priorität: 27.09.2017 DE 102017122423
(43) Veröffentlichungstag der Anmeldung: 10.04.2019
(73) Patentinhaber: HORSCH LEEB Application Systems GmbH, 94405 Landau an der Isar (DE)
(72) Erfinder: LEEB, Theodor, 94562 Oberpöring (DE); ZINK, Florian, 94562 Oberpöring (DE)
(74) Vertreter: Benninger, Johannes

(56) Entgegenhaltungen:
- EP-A1- 2 510 784
- EP-A1- 2 829 177
- WO-A1-2016/128577
- US-A1- 2014 074 360
- US-A1- 2016 255 769

## Beschreibung

Die vorliegende Erfindung betrifft eine landwirtschaftliche Verteilmaschine zum Ausbringen von Flüssigkeiten und/oder körnigen oder granulierten Stoffen mit den Merkmalen des Oberbegriffs des unabhängigen Anspruchs 1. Die Erfindung betrifft zudem ein Verfahren zur Steuerung und/oder Regelung einer Verteilmaschine mit den Merkmalen des Oberbegriffs des unabhängigen Verfahrensanspruchs 6.

In der Landwirtschaft finden verschiedenste Ausführungsformen von Verteilmaschinen zum Ausbringen von unterschiedlichsten Wirkstoffen wie Flüssigkeiten und/oder körnigen oder granulierten Stoffen Verwendung. Häufig werden derartige landwirtschaftliche Verteilmaschinen auch als Feldspritzen bezeichnet. Zur Verteilung der jeweiligen Wirkstoffe besitzen die Verteilmaschinen in der Regel eine sich in Arbeitsposition quer zur Fahrtrichtung erstreckende Verteilvorrichtung. Die Verteilmaschinen können sowohl als selbstfahrende oder auch als an einem Zugfahrzeug angehängte oder angebaute Verteilmaschinen ausgebildet sein. Zudem gibt es darüber hinaus bereits erste Lösungsansätze, um derartige Verteilmaschinen auch als autonome Fahrzeuge bzw. Verteilmaschinen zu bauen. Die Verteilvorrichtungen bzw. die auch als Spritzgestänge bezeichneten Verteilvorrichtungen weisen mitunter große Arbeitsbreiten von zwanzig Meter und mehr auf, wobei derartige Verteilvorrichtungen zumeist in mehrere Gestängesegmente unterteilt sind, die jeweils um aufrechte Achsen schwenkbar zueinander angeordnet sind und somit, u.a. für eine Transportfahrt, um diese aufrechte Achsen in eine für die Transportfahrt maximal zulässige Transportbreite zusammengeklappt werden können.

Eine derartige Verteilmaschine geht bspw. aus der EP 2 829 177 B1 bereits hervor. Die landwirtschaftliche Verteilmaschine dient zum Ausbringen von flüssigen und/oder festen Wirkstoffen und umfasst u.a. eine quer zur Fahrrichtung angeordnete Verteilvorrichtung mit einem Mittelteil und über vertikale bzw. aufrechte Schwenk- und Drehachsen am Mittelteil drehbar gelagerte seitliche Sektionen, wobei die Schwenk- und Drehachsen mit Dämpfungselementen versehen sind und zwischen dem Mittelteil und den seitlichen Sektionen Mittel zur Reduzierung eines Federweges der seitlichen Sektionen angeordnet sind. Um die jeweiligen Dämpfungselemente auf Basis von Fahrbewegungen regeln zu können, ist vorgesehen, dass die Dämpfungselemente in Abhängigkeit von der jeweils aktuellen Bewegungsart der Verteilmaschine über eine Regeleinheit ansteuerbar bzw. regelbar sind. Somit können die durch vertikale Schwenkbewegungen bzw. durch Gier- und Nickbewegungen hervorgerufenen Beschädigungen der Verteilvorrichtung verhindert werden. Eine kontrollierte Verstellung bzw. Verschwenkung der Verteilvorrichtung oder deren Gestängesegmente, bspw. um Ecken einer Ackerfläche bearbeiten zu können, ist nicht vorgesehen.

Vergleichbare Systeme gehen aus der EP 2 835 050 A1 sowie der EP 2 837 285 A1 hervor. Um vertikale Schwingungen der Verteilvorrichtung zu reduzieren, sind Mittel zur Erfassung dieser Schwingungen vorgesehen. Bei den Mitteln kann es sich insbesondere um ein Kamerasystem handeln. Auf Basis der mittels der Kamera erfassten Hub-, Gier- und Wankbewegungen werden die optimalen Schritte zur Korrektur und Optimierung der Bewegungen der Verteilvorrichtung hergeleitet, wobei hierfür wiederum die Wankbewegungen, insbesondere mittels eines mit elektrischer Energie betriebenen Dämpfersystems, geregelt werden. Auch dieses System sieht keine kontrollierte Verstellung der Verteilvorrichtung, bspw. um Ecken oder Kurven einer Ackerfläche bearbeiten zu können sowie keine Berücksichtigung von Grenzen und Randstrukturen der Ackerfläche vor.

Ein Verfahren zur Korrektur von in einem Speicher eines Arbeitsrechners einer landwirtschaftlichen Verteilmaschine gespeicherter, bspw. mittels eines GPS-Systems aufgezeichneter Positionskoordinaten geht aus der EP 2 983 010 A1 hervor. Das hierin beschriebene Verfahren soll sich durch zwei vorzugsweise senkrecht zueinander orientierte Verschiebeoperationen der gespeicherten Positionskoordinaten relativ zur aktuellen Position auszeichnen, wobei die erste dieser Verschiebeoperationen auf Grund von Lage und/oder Bewegungsrichtungsdaten der Arbeitsmaschine, vorzugsweise bestimmt auf Basis der Fahrtrichtung, vorgenommen wird. Somit kann zwar die aktuelle Positionsbestimmung der Maschine verbessert werden, eine kontrollierte Verstellung der Verteilvorrichtung, bspw. um Ecken oder Spitzen oder Kurven oder dergl. einer Ackerfläche bearbeiten zu können, sieht das Verfahren ebenso nicht vor.

Aus der EP 1 840 690 A2 geht darüber hinaus ein Verfahren zur Erstellung eines Routenplans für eine Gruppe von landwirtschaftlichen Maschinen für die Bearbeitung einer Ackerfläche hervor. Das Routenplanungssystem umfasst hierfür Positionsermittlungseinrichtungen um eine aktuelle Position der betreffenden Verteilmaschinen zu ermitteln, Routenplanungsdaten-Ermittlungseinrichtungen um die notwendigen Routenplanungsdaten zur Verfügung zu stellen, bspw. durch automatische Erfassung der Positionsdaten sowie weiterer Zusatzinformationen und/oder durch Eingabe durch einen Bediener, sowie Kommunikationseinrichtungen, um die Routenplanungsdaten zu versenden. Durch das beschriebene Verfahren sollen möglichst viele landwirtschaftliche Maschinen ungehindert gleichzeitig auf einer Ackerfläche arbeiten können. Zudem sieht das Verfahren vor, dass Sicherheitsbereiche definiert werden können, bspw. an Straßenrändern, in welchen die landwirtschaftlichen Maschinen nicht fahren können. Derartige Sicherheitsbereiche sind jedoch für eine Verteilung von Pflanzenschutzmitteln nicht akzeptabel, da durch derartige Bereiche somit keine gewünschte gleichmäßige Pflanzenschutzmaßnahme über den gesamten Pflanzenbestand erreicht wird. Zudem erfolgt die Definition der optimalen Route alleine unter dem Aspekt der Fahrwege bzw. der Fahrspuren der jeweiligen Maschinen, ohne Berücksichtigung einer optimalen ganzflächigen Bearbeitung bzw. Behandlung der landwirtschaftlichen Fläche. Auch finden Ecken und Randstrukturen der landwirtschaftlichen Fläche keine Berücksichtigung zur Ansteuerung von Verteilvorrichtungen oder Arbeitsvorrichtungen der landwirtschaftlichen Maschinen.

Eine Verteilmaschine mit einem verbesserten System zur Teilbreitensteuerung geht aus der EP 2 918 157 B1 hervor. Um Doppelbehandlungen bei Kurvenfahrten oder am Vorgewende zu vermeiden, sieht das System einen Winkelsensor vor, der den Winkel zwischen einem Zugfahrzeug und der Verteilvorrichtung messen kann. Zudem umfasst die Verteilmaschine einen Positionssensor, der die Position eines Zugfahrzeuges der Verteilmaschine bzw. die Position der Verteilmaschine messen kann und somit die Teilbreiten der Verteilvorrichtung in Abhängigkeit der Position und des Winkels jeweils entsprechend geschalten werden. Eine aktive Veränderung der Position bzw. des Winkels der Verteilvorrichtung in Bezug auf die Verteilmaschine, um bspw. bestimmte Ackerbereiche bearbeiten zu können, sieht das System nicht vor.

Darüber hinaus zeigt die EP 1 716 754 B1 eine landwirtschaftliche Verteilmaschine mit einem Rahmen und einem auf dem Rahmen angeordneten Vorratsbehälter sowie mit einer an dem Rahmen mittels einer Aufhängevorrichtung angeordneten Verteilvorrichtung, welche um eine aufrechte Achse gegenüber dem Rahmen verschwenkbar aufgehängt ist, wobei zwischen dem Rahmen und der Verteilvorrichtung zumindest ein von vorzugsweise einer elektronischen Regeleinrichtung ansteuerbares motorisches Stellglied zum Verstellen des Verteilergestänges um die aufrechte Achse vorgesehen ist, sowie dass Mittel vorhanden sind, mittels denen die Verteilvorrichtung mittels des Stellglieds stets rechtwinklig zur Sollrichtung bzw. zur Fahrspur der Verteilmaschine ausgerichtet wird, d.h. das insbesondere auch bei einer Kurvenfahrt die Verteilvorrichtung stets rechtwinkelig zum Rahmen bzw. zur Fahrtrichtung der Verteilmaschine ausgerichtet ist, wodurch es nicht möglich ist, Ecken oder Spitzen oder Kurven oder dergl. einer Ackerfläche auch zu behandeln. Zudem wird jeweils die gesamte Verteilvorrichtung entsprechend verschwenkt, was wiederum zu fehlerbehafteten Behandlungen führen kann. Auch erfolgt hierbei das Verschwenken der Verteilvorrichtung einzig auf Basis der erfassten Position bzw. der jeweiligen Sollrichtung, wodurch die Verteilvorrichtung mitunter schnell verschwenkt wird. Hierdurch kann es jedoch wiederum zu Fehlbehandlungen kommen, da durch die Verschwenkung der gesamten Verteilvorrichtung mitunter manche Teilbereiche doppelt und manche Teilbereiche mit zu wenig Wirkstoffen behandelt werden, was zudem durch die unkontrollierte Geschwindigkeit noch weiter verschlechtert wird.

Eine weitere landwirtschaftliche Verteilmaschine mit einem motorisch faltbaren Spritzgestänge sowie ein Verfahren zum motorischen Ein- und Ausklappen eines solchen Spritzgestänges ist durch die DE 10 2013 221 468 A1 offenbart. Das motorisch faltbare Spritzgestänge mit zwei symmetrischen Auslegerarmen ist an einem Trägerfahrzeug befestigt. Die Auslegerarme umfassen jeweils vier Abschnitte, die über schwenkbare Gelenke jeweils gelenkig miteinander verbunden sind. Den Gelenken sind jeweils Winkel- und/oder Lagesensoren zugeordnet, mittels welchen der relative Schwenkwinkel zwischen benachbarten Abschnitten erfasst werden kann. Zudem sind den Gelenken Schwenkantriebe zur relativen Verschwenkung jeweils benachbarter Schwenkantriebe zugeordnet. Die Winkel- und/oder Lagesensoren und die Schwenkantriebe sind jeweils mit einer zentralen Steuereinrichtung zur lage- bzw. winkelabhängigen Geschwindigkeitssteuerung der Antriebe gekoppelt, so dass eine annähernd synchrone und winkelsymmetrische Steuerung der Klappvorgänge der einzelnen Abschnitten implementiert wird.

Eine landwirtschaftliche Verteilmaschine mit einer dynamischen Einstellung der Ausleger ist darüber hinaus durch die US 2014/0074360 A1 offenbart. Zur Erfassung des Abstands zwischen Gestänge und Bestand können an den Auslegern Abstandssensoren vorgesehen sein, so dass in Abhängigkeit davon die Höhe der Ausleger eingestellt wird. Wahlweise kann an den Auslegern ein Vorausschau-Modul (LAM) vorgesehen sein, um die Notwendigkeit der Anpassung der Ausleger vorauszusehen. Die mittels der Sensoren erfassten Werte können dazu dienen, durch Bereitstellung von Echtzeit-Daten topografische Karten oder dergleichen zu aktualisieren.

Eine weitere landwirtschaftliche Verteilmaschine geht durch die EP 2 510 784 A1 hervor. Die Verteilmaschine umfasst ein Verteilergestänge mit variabler Faltgeschwindigkeit. Das Verteilergestänge ist mit mehreren Gestängeabschnitten gelenkig miteinander verbunden und jeweils mittels motorischer Stellelementen in eine erste und in eine zweite Klappstellung bringbar. Im Bereich der Gelenke können Sensoren zur Erfassung der Positionen der zueinander einklappbaren Gestängeabschnitten angeordnet sein. Die Sensoren erzeugen entsprechende Positionssignale, welche an eine Steuervorrichtung übertragen werden. Die Steuervorrichtung ist derart ausgebildet, dass in Abhängigkeit der Positionssignale bezüglich der Stellung der zueinander einklappbaren Gestängeabschnitte zueinander die von den motorischen Stellelementen erzeugte Klappgeschwindigkeit veränderbar ist. So ist beispielsweise zu Beginn des Klappvorgangs eine Beschleunigungsphase der Klappbewegung und zum Ende des Klappvorgangs eine Verzögerungsphase der Klappbewegung vorgesehen. Um das Ein- und Ausklappen der Gestängeabschnitte an verschiedene Einsatzbedingungen anzupassen, ist vorgesehen, dass die Steuervorrichtung Einstellelemente aufweist. Mittels der Einstellelemente ist die von den motorischen Stellelementen erzeugte Klappgeschwindigkeit einstellbar.

Aus der US 2016/255769 A1 ist weiterhin eine landwirtschaftliche Verteilvorrichtung mit Spritzgestänge bekannt. Die Verteilvorrichtung ist dazu in der Lage, bei unebenen Böden und sich bewegendem oder wankendem Trägerfahrzeug eine möglichst exakte Beibehaltung der Abstände der Ausleger gegenüber der Bodenoberfläche zu ermöglichen.

Das Dokument WO 2016/128577 A1 zeigt eine Vorrichtung zum Ausbringen von Flüssigkeiten sowie ein Verfahren zur Bewegungssteuerung wenigstens zweier Auslegerarme einer landwirtschaftlichen Feldspritze. Die Vorrichtung kann mehrere Sensoren vorsehen, mittels welchen der jeweilige relative Abstand der Auslegerarme zur Bodenfläche bzw. zum jeweiligen Bestand zu einer Bodenfläche, sowie mittels welcher zumindest ein in Fahrtrichtung vorauseilendes Umgebungsprofil festgestellt bzw. erfasst werden kann. Die Stellglieder können unter Berücksichtigung des durch die Sensoren gemessenen Ist-Abstandes und des erfassten Umgebungsprofiles angesteuert werden. Weiterhin kann es möglich sein, das in Fahrtrichtung vorauseilende Umfeld in Form eines Geländereliefs einschließlich Bestandslücken, Fahrgassen, Hindernisse oder sonstige Unregelmäßigkeiten zu erfassen.

Somit sind aus dem Stand der Technik verschiedenste Systeme bekannt, um insbesondere die Dämpfungseigenschaften einer Verteilvorrichtung zu beeinflussen, sowie um eine Verteilvorrichtung um eine aufrechte Achse zu verschwenken. Auch ist es bekannt, verschiedenste Fahrspuren zu definieren, entlang derer die Verteilmaschinen jeweils geführt werden. Um jedoch eine exakte Bearbeitung bzw. Behandlung einer Ackerfläche zu gewährleisten, ist es auch erforderlich, die Ecken und Spitzen oder Kurven oder dergl. exakt zu bearbeiten d.h. dass die komplette Ackerfläche bearbeitet wird und keine Fehlstellen bzw. sog. Spritzfenster vorhanden sind, da an unbehandelten Flächen Unkräuter wachsen können, welche sich wiederum entsprechend vermehren und zudem überbehandelte Flächen Resistenzen erzeugen können. Dies ist jedoch insbesondere bei Verteilmaschinen mit Verteilvorrichtungen mit einer großen Arbeitsbreite von 20 Meter und mehr nicht ohne weiteres möglich, da es bislang erforderlich war, die jeweiligen Ecken durch eine Rückwärtsfahrt auszufahren und anschließend diese zu bearbeiten bzw. zu behandeln oder einzelne Gestängesegmente einzuklappen. Da jedoch bei großen Arbeitsbreiten bereits geringste Lenkwinkelveränderungen zu großen Auslenkungen der Verteilvorrichtung führen, ist dies nicht immer ohne weiteres möglich, insbesondere wenn es sich um keine rechtwinkligen Ecken handelt, sondern um stumpfe oder spitze Winkel aufweisende Ecken. Um diese exakt zu bearbeiten bzw. zu behandeln, kommt es immer wieder vor, dass durch das jeweilige Rangieren bei der Rückwärtsfahrt der Pflanzenbestand beschädigt wird bzw. viele Pflanzen überfahren werden. Insbesondere ist für das jeweilige Rangieren auch ein großes fahrerisches Geschick einer Bedienperson erforderlich. Auch besteht ein weiteres Problem bei den aus dem Stand der Technik bekannt gewordenen Verteilmaschinen darin, dass diese, wenn sie entlang einer Fahrspur geführt werden, die Ränder der Ackerfläche nicht mehr exakt bearbeiten können, da die Verteilvorrichtung jeweils auf Basis der Ausrichtung der Verteilmaschine verschwenkt wird, wobei die Ausrichtung der Verteilmaschine jedoch abweichend zu einer Randstruktur der Ackerfläche ist.

Der Erfindung liegt somit die Aufgabe zugrunde, eine landwirtschaftliche Verteilmaschine mit einer Verteilvorrichtung mit großer Arbeitsbreite sowie ein Verfahren zur Steuerung dieser Verteilmaschinen zu schaffen, mit der es vereinfacht wird, auch stumpfe oder spitze oder rechte Winkel aufweisende Ecken und kurvenreiche Grenzen bzw. Randstrukturen einer Ackerfläche zu bearbeiten bzw. zu behandeln, ohne hierbei den Pflanzenbestand zu beschädigen und gleichzeitig Doppelbehandlungen weitgehend zu vermeiden.

Diese Aufgaben der Erfindung werden durch eine landwirtschaftliche Verteilmaschine zum Ausbringen von Flüssigkeiten und/oder körnigen oder granulierten Stoffen mit den Merkmalen des Anspruchs 1 sowie durch ein Verfahren zur Steuerung und/oder Regelung einer Verteilmaschine mit den Merkmalen des Verfahrensanspruchs 6 gelöst. Weitere vorteilhafte Ausgestaltungen und Weiterbildungen der Erfindung sind in den jeweiligen abhängigen Ansprüchen angegeben.

Zur Lösung der genannten Aufgaben schlägt die Erfindung eine landwirtschaftliche Verteilmaschine vor. Die landwirtschaftliche Verteilmaschine kann hierbei als selbstfahrende oder als mittels Zugfahrzeug gezogene oder als eine an einem Zugfahrzeug angebaute Verteilmaschine ausgeführt sein. Auch kann die Verteilmaschine als ein autonomes Fahrzeug ausgeführt sein bzw. eine autonome Verteilmaschine mit Verteilvorrichtung sein. Die Verteilmaschine umfasst zumindest einen Rahmen zum Tragen der jeweiligen Komponenten, einen oder mehrere Vorratsbehälter zum Mitführen und Bereitstellen des jeweiligen Verteilguts sowie eine sich in einer Arbeitsposition quer zur Fahrtrichtung erstreckende Verteilvorrichtung, an welcher Verteilvorrichtung nach unten gerichtete Ausbringdüsen zum Ausbringen und Verteilen der jeweiligen Flüssigkeiten und/oder der körnigen oder granulierten Stoffe angebracht sind.

Die Verteilvorrichtung ist beweglich am Rahmen angeordnet, wobei die Verteilvorrichtung hierfür bspw. mittels eines Parallelogramms oder mittels eines Linearschlittens auch in dessen Höhe verstellbar zum Rahmen angebracht aber auch direkt am Rahmen angebaut sein kann. Zum besseren Verständnis wird im nachfolgenden die Anbringung der Verteilvorrichtung jeweils nur auf den Rahmen bezogen, wobei dadurch jedoch eine Verbindung bspw. mittels eines Parallelogramms oder dergl. Zwischenrahmen zwischen der Verteilvorrichtung und dem Rahmen nicht ausgeschlossen ist, sondern sich die Bezeichnung Rahmen gleichermaßen auch auf derartige Ausführungsformen bezieht bzw. derartige Ausführungsformen beinhaltet.

Zudem kann die Verteilvorrichtung in mehrere Gestängesegmente unterteilt sein, bspw. in ein Mittelteil und zwei, vorzugsweise links und rechts am Mittelteil befindliche, über aufrechte Achsen schwenkbar an diesem angebaute Seitenteile, wobei auch wiederum die Seitenteile aus mehreren ebenfalls mittels aufrechter Achsen schwenkbar zueinander angeordneter Gestängesegmente zusammengesetzt sein können. Beispielsweise kann sich ein Gestänge einer Verteilmaschine aus insgesamt elf Gestängesegmenten zusammensetzen, welche jeweils um aufrechte Achsen zueinander verschwenkbar sind. Es wäre auch jegliche weitere Anzahl an Gestängesegmenten denkbar.

Zudem kann auch die Verteilvorrichtung bzw. dessen Mittelteil um eine aufrechte Achse schwenkbar am Rahmen bzw. an einem dem Rahmen zugeordneten Parallelogramm oder Linearschlitten oder dergleichen angebracht sein. Das Verschwenken der jeweiligen Gestängesegmente bzw. der Verteilvorrichtung um die aufrechten Achsen erfolgt mittels zumindest eines von einer elektronischen Regeleinrichtung ansteuerbaren motorischen Stellglieds. Zudem können den Gestängesegmenten und/oder den aufrechten Achsen und/oder dem zumindest einen motorischen Stellglied Sensoren derartig zugeordnet sein, dass diese einen Istwert bzgl. der vorhandenen Ausrichtung bzw. der aktuellen Relativposition erfassen und an eine Regeleinrichtung weiterleiten bzw. ausgeben können.

Um eine landwirtschaftliche Verteilmaschine mit einer Verteilvorrichtung mit großer Arbeitsbreite zu schaffen, mit der es vereinfacht wird, auch stumpfe oder spitze oder rechte Winkel aufweisende Ecken und kurvenreiche Grenzen bzw. Randstrukturen einer Ackerfläche zu bearbeiten bzw. zu behandeln ohne hierbei den Pflanzenbestand zu beschädigen und gleichzeitig Doppelbehandlungen weitgehend zu vermeiden, ist vorgesehen, dass eine Verfahrgeschwindigkeit des zumindest einen motorischen Stellglieds und somit eine Geschwindigkeit des Verschwenkens der Verteilteilvorrichtung und/oder von deren Gestängesegmenten in Abhängigkeit von insbesondere sensorisch erfassten Parametern erfolgt.

So können als Parameter bspw. die Ausbringmenge und/oder die Fahrgeschwindigkeit und/oder die zurückgelegte Wegstrecke erfasst bzw. ausgewertet werden und anhand dieser Parameter das Gestänge entsprechend schneller oder langsamer verschwenkt werden.

Zudem könnte vorgesehen sein, dass ein Lenkwinkel eines der Verteilmaschine zugeordneten Fahrwerks erfasst wird und somit wiederum die Verfahrgeschwindigkeit des zumindest einen Stellglieds entsprechend angepasst werden, d.h. es könnte erfasst werden, welche Bewegungen das Fahrwerk ausführt und somit wiederum das Stellglied entsprechend angesteuert werden.

Zudem kann vorgesehen sein, dass zur Erfassung und/oder Auswertung einer vorhandenen Randstruktur der Verteilmaschine zugeordnet und/oder mit einer Regeleinrichtung dieser in Verbindung stehend Konturermittlungseinrichtungen vorgesehen sind und dass eine Ansteuerung des zumindest einen motorischen Stellglieds zur Verschwenkung der Gestängesegmente und/oder der Verteilvorrichtung in Abhängigkeit einer erfassten aktuellen Ausrichtung bzw. Relativposition der Gestängesegmente und/oder der Verteilvorrichtung und der jeweils vorhandenen bzw. erfassten Randstruktur erfolgt.

Durch die erfindungsgemäße Verteilmaschine bzw. durch deren Verteilvorrichtung wird mittels des Stellgliedes die Verteilvorrichtung bzw. deren Gestängesegmente jeweils derartig zueinander verschwenkt, dass diese eine zumindest weitgehend parallele und/oder rechtwinkelige Ausrichtung zu erfassten bzw. vorhandenen Randstruktur aufweisen, wodurch jeweils vorhandene Ecken bzw. Randstrukturen mit verschiedensten Winkel und Kurven entsprechend ganzflächig behandelt werden können und zudem Doppelbehandlungen weitgehend vermieden werden können.

Vorzugsweise kann die Verteilvorrichtung um eine in Fahrtrichtung verlaufende Drehachse mittels zumindest eines Antriebselements entsprechend einer Bodenkontur verschwenkt werden, um somit eine möglichst exakte Anpassung an die jeweilige Bodenkontur bzw. den jeweiligen Horizont zu erreichen bzw. um möglichst gleiche Abstände zwischen der Verteilvorrichtung und der Bodenkontur bzw. zu einem Pflanzenbestand zu erreichen.

Bei den Sensoren zur Erfassung der jeweiligen Ausrichtung bzw. der jeweiligen Relativposition kann es sich insbesondere um Winkelpotentiometer oder Winkelsensoren oder Positionssensoren oder dergl. Sensoren handeln. Auch Linearmesssysteme wären denkbar bzw. einsetzbar. Generell wären somit jegliche Sensoren denkbar, mittels denen eine aktuelle Ausrichtung erfasst bzw. ermittelt werden kann. Mittels der Sensoren wird somit bspw. erfasst, welche Winkel die jeweiligen Gestängesegmente zueinander aufweisen oder welchen Winkel die Verteilvorrichtung oder dessen Mittelteil in Bezug auf den Rahmen aufweist.

Um dies noch weiter zu verbessern, könnten der Verteilmaschine zumindest ein aus wenigstens zwei Rädern gebildetes Fahrwerk bzw. eine oder mehrere lenkbare Achsen zugeordnet sein. Insbesondere können die Räder wiederum über aufrechte Achsen schwenkbar bzw. lenkbar zum Rahmen angeordnet sein, wobei zur Lenkung wiederum zumindest ein von einer elektronischen Regeleinrichtung ansteuerbares motorisches Stellglied vorgesehen sein kann. Insbesondere oder wahlweise könnte auch wiederum dem Fahrwerk und/oder den aufrechten Achsen Sensoren derartig zugeordnet sein, dass diese jeweils einen Istwert bzgl. der vorhandenen Ausrichtung bzw. der aktuellen Relativposition Erfassen und an eine Regeleinrichtung weiterleiten bzw. ausgeben können. Auch kann anhand der vorhandenen Randstruktur wiederum die Lenkung bzw. das motorische Stellglied der Lenkung bzw. des Fahrwerks oder der Achse entsprechend gesteuert werden.

Wahlweise kann die landwirtschaftliche Verteilmaschine vier Räder umfassen, wobei jeweils zwei gegenüberliegende Räder ein Fahrwerk bzw. eine Achse bilden und wobei zumindest die Räder der vorderen Achse oder nur die Räder der hinteren Achse oder die Räder beider Achsen jeweils bspw. um aufrechte Achsen schwenkbar bzw. lenkbar zum Rahmen angeordnet sind. Die Achsen können zudem an einem die Komponenten der Verteilmaschine tragenden Rahmen montiert sein. Zudem kann die Verteilmaschine einen die Verteilmaschine antreibenden Motor und eine Kabine umfassen.

Auch könnte bei einer Ausführungsvariante der landwirtschaftlichen Verteilmaschine als mittels eines Zugfahrzeuges gezogene Verteilmaschine, diese zur Verbindung mit dem Zugfahrzeug eine Zugdeichsel aufweisen. Hierbei kann auch wiederum die Zugdeichsel um eine aufrechte Achse schwenkbar bzw. lenkbar zum Rahmen angebracht sein und ebenso wiederum mittels eines motorischen Stellgliedes eine Position bzw. Ausrichtung der Zugdeichsel in Bezug auf den Rahmen verändert werden, um somit wiederum die Verteilmaschine zu lenken. Auch hierbei können Sensoren vorgesehen sein, die eine aktuelle Ausrichtung der Zugdeichsel in Bezug auf den Rahmen und/oder des Zugfahrzeugs erfassen und die Verteilmaschine somit wiederum in Abhängigkeit einer vorhandenen Randstruktur und einer erfassten Relativposition bzw. Ausrichtung das Stellglied entsprechend angesteuert werden. Auch könnten die Räder bzw. die Achsen und die Zugdeichsel gelenkt werden.

Die Verteilmaschine kann jeweils entlang einer definierbaren bzw. einer definierten Fahrspur geführt werden, d.h. dass bspw. die Räder oder die Zugdeichsel bzw. die Verteilmaschine derartig gelenkt wird, dass diese einer Fahrspur folgt, wodurch wiederum ein Überfahren von Pflanzen verhindert bzw. verringert werden kann. So können zur Erfassung und/oder Auswertung einer Fahrspur der Verteilmaschine zugeordnet und/oder mit einer Regeleinrichtung in Verbindung stehend Spurermittlungseinrichtungen vorgesehen sein. So könnten als Fahrspuren bspw. sog. Fahrgassen verwendet werden, welche mittels zusätzlicher Messmittel erfasst werden können oder deren Daten in der Regeleinrichtung hinterlegt sein können. Auch könnten als Spurermittlungseinrichtungen ein Laserscanner und/oder eine Kamera bzw. ein Kamerasystem und/oder ein Radarsensor vorgesehen sein. Ebenso könnte zur Spurermittlung ein GPS-System an der Verteilmaschine vorgesehen sein. Ebenso wäre es denkbar, dass die jeweiligen Fahrspuren aus einer Datenbank ausgelesen werden oder dass die Fahrspur anhand eines ermittelten Kurvenradius mittels eines in der Regeleinrichtung hinterlegten Steuerungsprogramms berechnet wird.

Auch könnte in einer Weiterbildung der Erfindung vorgesehen sein, dass in Abhängigkeit der erfassten bzw. der vorhandenen Randstruktur und der aktuell ermittelten Ausrichtung der Verteilmaschine bzw. der Verteilvorrichtung oder deren Gestängesegmente jeweils mittels einer Anzeigevorrichtung Hinweise über mögliche Korrekturbewegungen der Lenkung der Verteilmaschine ausgegeben und angezeigt werden.

Zudem könnte vorgesehen sein, dass die Verteilmaschine die jeweilige Anpassung der Verteilvorrichtung und/oder der Gestängesegmente sowie der jeweiligen Lenkung und der Fahrbewegungen autonom durchführt, insbesondere ohne jeglichen Eingriff durch eine Bedienperson. Insofern die Verteilmaschine an ein Zugfahrzeug angebaut ist, könnte auch vorgesehen sein, dass das Zugfahrzeug bzw. deren Steuerungseinheit mit der Regeleinrichtung der Verteilmaschine in Verbindung steht und wiederum das Zugfahrzeug entsprechend autonom auf Basis der vorhandenen Randstruktur und der erfassten aktuellen Relativposition jeweils mittels der Regeleinrichtung der Verteilmaschine angesteuert wird.

Zudem könnte vorgesehen sein, dass darüber hinaus beispielsweise eine weitere Steuerungseinheit und eine Antriebseinheit der Verteilmaschine angesteuert werden. Somit könnten auch die Fahrbewegungen der Verteilmaschine wiederum in Abhängigkeit der Relativposition und der Randstruktur sowie bspw. auch der Fahrspuren entsprechend gesteuert bzw. geregelt werden. Dadurch kann insbesondere erreicht werden, dass bei einer Verteilmaschine sowohl deren Verteilvorrichtung als auch deren Fahrbewegungen weitgehend autonom und ohne Einwirkung einer Bedienperson durchgeführt werden.

Die erfasste Randstruktur könnte bspw. ein Feldrand bzw. ein Feldende sein oder auch ein Rand des Pflanzenbestands, d.h. so könnte der Übergang zu einer anderen Pflanzensorte erkannt werden. Beispielsweise kann eine Ackerfläche eine sich aus mehreren Seiten zusammengesetzte Randstruktur aufweisen, welche Randstruktur zudem mehrere Ecken mit verschiedenen Winkel zueinander beinhalten kann. Ebenso wären auch Randstrukturen denkbar, welche Kurven oder welche Ecken und Kurven aufweisen. Auch könnten als Randstruktur Fahrgassen ermittelt werden. Auch Zäune wären als Randstruktur erfassbar bzw. ausgewertet werden. Hierdurch können zudem Überlappungen und Doppelbehandlungen noch weiter vermieden werden. Zudem könnten auch bereits behandelte bzw. bereits bearbeitete Flächen des Pflanzenbestands bzw. der jeweiligen Ackerfläche als Randstruktur erfasst werden. Auch Straßen oder Wege können als Randstruktur erkannt bzw. erfasst werden. Ebenso könnten die Randstrukturen jeweils in der Regeleinrichtung hinterlegt sein bzw. könnte die Regeleinrichtung entsprechend Daten aus einer Datenbank abrufen.

Zur Erfassung und/oder Auswertung der Randstruktur bzw. als Konturermittlungseinrichtung kann bspw. ein GPS-System an der Verteilmaschine vorhanden sein bzw. mit der Regeleinheit in Verbindung stehen. Auch wäre es denkbar, einen Laserscanner zu verwenden. Auch eine oder mehrere Kameras bzw. ein Kamerasystem könnten verwendet werden. Zudem könnten auch Radarsensoren verwendet werden. Auch eine Kombination aus mehreren der vorgenannten Systeme wäre denkbar. So könnte bspw. durch die Kombination aus einem GPS-System mit einem Sensor oder einer Kamera die jeweilige Randstruktur noch exakter erfasst werden.

Es sei hierzu angemerkt, dass der Begriff GPS-System sowohl bei der Ermittlung der Randstruktur als auch der Ermittlung der Fahrspuren als Oberbegriff für jegliches Satelliten basiertes System steht. Wenn also jeweils von GPS-System die Rede ist, so sind hierbei ebenso bspw. das russische GLONASS-System oder das europäische GALILEO-System oder das chinesische BEIDOU-System usw. miterfasst.

In einer weiteren Ausführungsform wäre es zudem vorstellbar, dass die jeweilige Randstruktur auf Basis eines, mit bspw. einem Gyroskop ermittelten, Kurvenradius und einem in der Regeleinrichtung hinterlegten Steuerungsprogramm ermittelt bzw. berechnet wird. Zudem könnte die jeweilige Randstruktur mittels der Regeleinrichtung aus einer Datenbank abgerufen werden.

Um die jeweilige Position der Verteilvorrichtung bzw. auch dessen Ausrichtung in Bezug auf die Verteilmaschine bzw. den Rahmen noch exakter zu erfassen, könnte zudem die Ausrichtung der Verteilmaschine miterfasst werden, wobei hierfür bspw. zwischen einem Zugfahrzeug und der Verteilmaschine ein Winkelsensor angebracht sein kann. Auch könnten an den Fahrwerken bzw. an den Rädern oder deren Lagerstellen Lenkwinkelsensoren angebracht sein. Auch könnten an der Verteilmaschine Beschleunigungssensoren oder Drehratensensoren oder Gyroskope angebaut sein. Auch eine Kombination der vorgenannten Sensoren wäre denkbar bzw. vorstellbar.

Um eine jeweils möglichst exakte Ausrichtung der Gestängesegmente bzw. der Verteilvorrichtung zu erreichen, ist in der Regeleinrichtung ein Steuerungsprogramm hinterlegt, welches unter Berücksichtigung der erfassten Istwerte der Ausrichtung bzw. der Relativposition und der erfassten bzw. vorhandenen Randstruktur, eine Berechnung zur Ansteuerung des zumindest einen motorischen Stellglieds erstellt, wobei mittels des Steuerungsprogramms hierfür auch entsprechende Verfahrgeschwindigkeiten des Stellgliedes definiert werden können. Die Verfahrgeschwindigkeiten könnten zudem unter Berücksichtigung und Verarbeitung von aktuellen Fahrbewegungen der Verteilmaschine noch weiter präzisiert werden, d.h. je größer die Fahrgeschwindigkeit der Verteilmaschine, desto schneller die Verfahrgeschwindigkeit des zumindest einen motorischen Stellglieds.

Bei den Fahrbewegungen kann beispielsweise erfasst werden, ob die Verteilmaschine oder dessen Zugfahrzeug sich vorwärts oder rückwärts bewegt oder mit welcher Geschwindigkeit die Verteilmaschine oder dessen Zugfahrzeug bewegt wird. Auch könnte erfasst werden, ob die Verteilmaschine oder dessen Zugfahrzeug beschleunigt oder verzögert wird.

Die Verfahrgeschwindigkeiten könnten jedoch auch auf Basis von verschiedenen anderen Parametern erfolgen, so dass wiederum durch ein zu schnelles oder zu langsamen verschwenken Doppelbehandlungen und/oder Unterbehandlungen vermieden werden können. So kann die Verfahrgeschwindigkeit bspw. auf Basis der Fahrgeschwindigkeit der Verteilmaschine und/oder auf Basis der Ausbringmenge und/oder auf Basis der Wegstrecke und/oder auf Basis der jeweils erfassten Relativpositionen erfolgen. Auch diese Parameter können bspw. wieder mittels verschiedenster Messmittel erfasst und mittels des in der Regeleinrichtung hinterlegten Steuerungsprogramms verarbeitet werden.

Auch wäre es denkbar, dass eine Regelung des zumindest einen motorischen Stellglieds durch eine Vorwärtsfahrt deaktiviert und durch eine Rückwärtsfahrt aktiviert wird. Zudem können dem zumindest einen motorischen Stellglied Dämpfungsmittel zur Unterbindung von sog. Gier- und Nickbewegungen in Fahrtrichtung zugeordnet sein, wobei diese hiervon unberührt sein können und sowohl bei Vorwärtsfahrt als auch bei Rückwärtsfahrt aktiviert bleiben können. Die Gier- und Nickbewegungen können beispielsweise sensorisch erfasst werden, so etwa mittels Beschleunigungs- und/oder Drehratensensoren, deren Ausgangssignal sich in entsprechender Weise zur Gewinnung von Bewegungsparametern des die Sensoren tragenden Bauteils auswerten lassen.

Eine Ansteuerung des zumindest einen Stellglieds kann derartig erfolgen, dass die Verteilvorrichtung und/oder deren Gestängesegmente eine zumindest weitgehend parallele Ausrichtung zur vorhandenen Randstruktur aufweisen oder das sich die projizierten senkrechten Ebenen der Verteilvorrichtung oder deren Gestängesegmente und der Randstruktur schneiden. Auch können sowohl die parallele Ausrichtung als auch die rechtwinkelige Ausrichtung zur Randstruktur in einem definierbaren Offset erfolgen, so dass eine Regelung entsprechend beschleunigt werden kann, jedoch diese dennoch ausreichend genau ist um ein gewünschtes Arbeitsergebnis zu erzielen.

In einer Weiterbildung wäre es zudem denkbar, dass in Abhängigkeit der erfassten Ausrichtung der Verteilvorrichtung bzw. der Gestängesegmente jeweils eine Ansteuerung der Teilbreiten der Verteilvorrichtung erfolgt, so dass eine Doppelbehandlung des Pflanzenbestandes noch weiter verhindert werden kann. Auch kann vorgesehen sein, dass in Abhängigkeit der erfassten Ausrichtung der Verteilvorrichtung bzw. der Gestängesegmente in Bezug auf die erfasste bzw. vorhandene Randstruktur, die Ausbringmengen an den Teilbreiten der Verteilvorrichtung erhöht oder verringert werden bzw. dass auch die Ausbringmengen an einzelnen Spritzdüsen entsprechend erhöht oder verringert werden. So dass wiederum eine Überbehandlung verhindert werden kann. Ebenso wäre es denkbar, dass auf Basis der vorhandenen Randstruktur an der Verteilvorrichtung verschiedene Spritzmuster ausgebracht werden, welche Spritzmuster bspw. durch eine Ansteuerung von verschiedenen Spritzdüsen oder durch verschiedene Ausbringmengen erzeugt werden können. Als Teilbreiten können bspw. auch einzelne Gestängesegmente dienen, so dass bspw. in Abhängigkeit der Randstruktur die Spritzdüsen von einzelnen Gestängesegmenten abgeschaltet werden.

In einer weiteren Ausführungsvariante könnte zudem vorgesehen sein, dass zusätzlich zur Lenkung und/oder der Verschwenkung der Verteilvorrichtung oder von deren Gestängesegmenten um die aufrechten Achsen die Verteilvorrichtung zusätzlich quer zur Fahrrichtung mit verschwenkt bzw. verschoben werden kann. Hierfür kann die Verteilvorrichtung bspw. mittels eines zusätzlichen Parallelogramm am Rahmen oder an einem dem Rahmen zugeordneten Parallelogramm gelagert sein oder bspw. mittels eines quer zur Fahrtrichtung verlaufenden Linearschlitten oder dergl. Zur Verschwenkung quer zur Fahrtrichtung kann der Verteilvorrichtung zumindest ein motorisches Stellglied zugeordnet sein, welches wiederum bspw. auf Basis einer vorhandenen Randstruktur entsprechend angesteuert wird und die Verteilvorrichtung entsprechend quer zur Fahrtrichtung verschwenkt. Auch kann dies ohne ein Verlassen der Fahrspuren erfolgen. Somit können Randstrukturen bzw. Kurven und Ecken noch exakter behandelt werden. Zur Erfassung der jeweiligen Position der Verteilvorrichtung quer zur Fahrtrichtung könnten zudem Sensoren vorhanden sein, um die jeweilige Relativposition zu ermitteln. Die sich durch die Verschwenkung quer zur Fahrtrichtung jeweils ergebenden unbehandelten Flächen könnten somit wiederum als Randstruktur erfasst bzw. definiert werden und bei einer Anschlussfahrt mit der Verteilmaschine an diese, die Verteilvorrichtung und/oder deren Gestängesegmente entsprechend auf Basis dieser Randstruktur verschwenkt werden.

Das zumindest eine motorische Stellglied kann insbesondere zwischen dem Rahmen und der Verteilvorrichtung oder zwischen dem Rahmen und einem Gestängesegment oder zwischen zwei Gestängesegmenten angebaut sein, und hydraulisch und/oder pneumatisch und/oder elektrisch betrieben werden. Insbesondere kann das zumindest eine Stellglied als Zylinder oder Linearantrieb oder Spindeltrieb oder dergl. ausgeführt sein. Auch können derartige hydraulische oder pneumatische Stellglieder verwendet werden, welche von einer elektrischen Steuerung oder einem elektrisch betätigten Ventil angesteuert werden.

Es sei angemerkt, dass die Begriffe "Regeleinrichtung" und "Steuerungsprogramm" als Oberbegriff für jegliche Art der Einflussnahme auf das zumindest eine Stellmittel verstanden werden, wobei der Begriff "Regeleinrichtung" auch eine "Steuerung" umfasst und umgekehrt, da eine Regelung eine Steuerung mit einer Rückkopplung der gesteuerten Größe ist. Die Regeleinrichtung kann somit auch als Regler, insbesondere zur Regelung des Stellmittels, ausgeführt sein. Zudem kann die Regeleinrichtung oder das Steuerungsprogramm als elektrische oder hydraulische oder pneumatische oder als elektropneumatische oder elektrohydraulische Steuerung ausgeführt sein.

Die jeweils vorhandenen aufrechten Achsen können sowohl senkrecht als auch diagonal oder schräg im Raum verlaufend sein, wobei diese aber insbesondere jeweils derartig ausgerichtet sind, dass mittels dieser bzw. durch Rotation um diese jeweils horizontale Rotationsbewegungen erzeugt werden.

Gemäß einem Ausführungsbeispiel der Erfindung kann die gesamte Verteilvorrichtung derartig verschwenkt werden, dass diese eine zumindest weitgehend parallele Ausrichtung zur Randstruktur aufweisen. Gemäß einem weiteren Ausführungsbeispiel der Erfindung kann die Verteilvorrichtung bzw. deren Gestängesegmente derartig verschwenkt werden, dass ein Gestängesegment eine weitgehend parallele Ausrichtung zu einer Randstruktur aufweist, sowie dass ein Gestängesegment eine weitegehend parallele und rechtwinkelige Ausrichtung zu einer Randstruktur aufweist.

Insbesondere kann die Verteilmaschine jeweils entlang einer definierbaren bzw. einer definierten Fahrspur geführt werden, was bedeutet, dass deren Räder und/oder deren Zugvorrichtung derartig gelenkt werden, dass diese der Fahrspur folgen. Zur Erfassung und/oder Auswertung dieser Fahrspur können der Verteilmaschine Spurermittlungseinrichtungen vorgesehen sein. Beispielsweise könnte eine Ansteuerung der Stellglieder auch derartig erfolgen, dass die Verteilmaschine jeweils den Fahrspuren folgt, wobei die Verteilvorrichtung oder deren Gestängesegmente hingegen jeweils auf Basis der vorhandenen Randstruktur entsprechend verschwenkt werden, so dass die Verteilvorrichtung oder deren Gestängesegmente der Randstruktur parallel und/oder rechtwinkelig folgen. Dies kann insbesondere bei einer Rückwärtsfahrt von Vorteil sein, da somit die Ecken und Kurven oder dergl. jeweils ganzflächig behandelt werden durch die fest definierten bzw. definierbare Fahrspuren jedoch wenig bis keine Pflanzen überfahren werden.

Wenn zuvor die erfindungsgemäße landwirtschaftliche Verteilmaschine beschrieben wurde, so sei an dieser Stelle ausdrücklich betont, dass alle Aspekte und Ausführungsvarianten, die im Zusammenhang mit der Verteilmaschine erläutert wurden, gleichermaßen Teilaspekte des nachfolgenden erfindungsgemäßen Verfahrens betreffen oder sein können. Wenn daher an einer Stelle bei der Beschreibung oder auch bei den Anspruchsdefinitionen von der erfindungsgemäßen landwirtschaftlichen Verteilmaschine die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte der landwirtschaftlichen Verteilmaschine sein können.

Zur Lösung der Aufgaben schlägt die Erfindung zudem ein Verfahren zur Steuerung und oder Regelung einer Verteilmaschine vor. Die landwirtschaftliche Verteilmaschine kann hierbei als selbstfahrende oder als mittels Zugfahrzeug gezogene oder als eine an einem Zugfahrzeug angebaute Verteilmaschine ausgeführt sein. Auch kann die Verteilmaschine als ein autonomes Fahrzeug ausgeführt sein bzw. eine autonome Verteilmaschine mit Verteilvorrichtung sein. Die Verteilmaschine umfasst zumindest einen Rahmen zum Tragen der jeweiligen Komponenten, einen oder mehrere Vorratsbehälter zum Mitführen und Bereitstellen des jeweiligen Verteilguts sowie eine sich in einer Arbeitsposition quer zur Fahrtrichtung erstreckende Verteilvorrichtung, an welcher Verteilvorrichtung nach unten gerichtete Ausbringdüsen zum Ausbringen und Verteilen der jeweiligen Flüssigkeiten und/oder der körnigen oder granulierten Stoffe angebracht sind.

Die Verteilvorrichtung ist beweglich am Rahmen angeordnet, wobei die Verteilvorrichtung hierfür bspw. mittels eines Parallelogramms oder mittels eines Linearschlittens auch in dessen Höhe verstellbar zum Rahmen angebracht aber auch direkt am Rahmen angebaut sein kann. Zum besseren Verständnis wird im nachfolgenden die Anbringung der Verteilvorrichtung jeweils nur auf den Rahmen bezogen, wobei dadurch jedoch eine Verbindung bspw. mittels eines Parallelogramms oder dergl. Zwischenrahmen zwischen der Verteilvorrichtung und dem Rahmen nicht ausgeschlossen ist, sondern sich die Bezeichnung Rahmen gleichermaßen auch auf derartige Ausführungsformen bezieht.

Zudem kann die Verteilvorrichtung in mehrere Gestängesegmente unterteilt sein, bspw. in ein Mittelteil und zwei über aufrechte Achsen schwenkbar an diesem angebaute Seitenteile, wobei auch wiederum die Seitenteile aus mehreren ebenfalls mittels aufrechter Achsen schwenkbar zueinander angeordneter Gestängesegmente zusammengesetzt sein können. Zudem kann auch die Verteilvorrichtung bzw. dessen Mittelteil um eine aufrechte Achse schwenkbar am Rahmen bzw. an einem dem Rahmen zugeordneten Parallelogramm oder Linearschlitten oder dergleichen angebracht sein. Das Verschwenken der jeweiligen Gestängesegmente bzw. der Verteilvorrichtung um die aufrechten Achsen erfolgt jeweils mittels zumindest eines von einer elektronischen Regeleinrichtung ansteuerbaren motorischen Stellglieds. Zudem sind den Gestängesegmenten und/oder den aufrechten Achsen und/oder dem zumindest einen motorischen Stellglied Sensoren derartig zugeordnet, dass diese jeweils einen Istwert bzgl. der vorhandenen Ausrichtung bzw. der aktuellen Relativposition Erfassen und an eine Regeleinrichtung weiterleiten bzw. ausgeben können.

Um eine landwirtschaftliche Verteilmaschine mit einer Verteilvorrichtung mit großer Arbeitsbreite zu schaffen, mit der es vereinfacht bzw. ermöglicht wird, auch stumpfe oder spitze oder rechte Winkel aufweisende Ecken bzw. Randbereiche zu bearbeiten bzw. zu behandeln, ohne hierbei den Pflanzenbestand zu beschädigen sowie um Doppelbehandlungen oder Unterbehandlungen durch ein unkontrolliertes Verschwenken der Verteilvorrichtung oder deren Gestängesegmente zu vermeiden, ist ein Verfahren vorgesehen, zumindest die nachfolgenden Verfahrensschritte in beliebiger Reihenfolge umfasst:
- Erfassung und Weiterleitung eines Istwertes bzgl. der Ausrichtung der Verteilvorrichtung und/oder der Gestängesegmente mittels diesen und/oder den aufrechten Achsen und/oder dem zumindest einen Stellglied zugeordneter Sensoren,
- Sensorische Erfassung von Ausbring- und/oder Fahrbewegungsparameter,
- Ansteuerung des zumindest einen motorischen Stellglieds in Abhängigkeit der vorhandenen Ausrichtung und der erfassten Parameter.

Als Parameter können bspw. die Ausbringmenge und/oder die Fahrgeschwindigkeit und/oder die zurückgelegte Wegstrecke erfasst bzw. ausgewertet werden und anhand dieser Parameter das Gestänge entsprechend schneller oder langsamer verschwenkt werden.

Zudem könnte vorgesehen sein, dass ein Lenkwinkel eines der Verteilmaschine zugeordneten Fahrwerks erfasst wird und somit wiederum die Verfahrgeschwindigkeit des zumindest einen Stellglieds entsprechend angepasst wird.

In einer weiteren Ausführungsvariante könnte zudem vorgesehen sein, dass zusätzlich zur Lenkung und/oder der Verschwenkung der Verteilvorrichtung oder von deren Gestängesegmenten um die aufrechten Achsen die Verteilvorrichtung zusätzlich quer zur Fahrrichtung mit verschwenkt bzw. verschoben werden kann. Hierfür kann die Verteilvorrichtung bspw. mittels eines zusätzlichen Parallelogramm am Rahmen oder an einem dem Rahmen zugeordneten Parallelogramm gelagert sein oder bspw. mittels eine, quer zur Fahrtrichtung verlaufenden Linearschlitten oder dergl. Zur Verschwenkung quer zur Fahrtrichtung kann der Verteilvorrichtung zumindest ein motorisches Stellglied zugeordnet sein, welches wiederum bspw. auf Basis einer vorhandenen Randstruktur entsprechend angesteuert wird und die Verteilvorrichtung entsprechend quer zur Fahrtrichtung verschwenkt. Auch kann dies ohne ein Verlassen der Fahrspuren erfolgen. Somit können Randstrukturen bzw. Kurven und Ecken noch exakter behandelt werden. Zur Erfassung der jeweiligen Position der Verteilvorrichtung quer zur Fahrtrichtung könnten zudem Sensoren vorhanden sein, um die jeweilige Relativposition zu ermitteln. Die sich durch die Verschwenkung quer zur Fahrtrichtung jeweils ergebenden unbehandelten Flächen könnten somit wiederum als Randstruktur erfasst bzw. definiert werden und bei einer Anschlussfahrt mit der Verteilmaschine an diese, die Verteilvorrichtung und/oder deren Gestängesegmente entsprechend auf Basis dieser Randstruktur verschwenkt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Fig. 1: eine Perspektivansicht einer als selbstfahrende Maschine ausgeführten landwirtschaftlichen Verteilmaschine mit einer sich in Arbeitsposition befindenden Verteilvorrichtung.
- Fig. 2: eine vergrößerte Perspektivansicht der landwirtschaftlichen Verteilmaschine bzw. deren Verteilvorrichtung gemäß der Fig. 1.
- Fig. 3: eine Draufsicht einer als selbstfahrende Maschine ausgeführten landwirtschaftlichen Verteilmaschine mit einer sich in Arbeitsposition befindenden Verteilvorrichtung und mittels Pfeilen angedeuteten Gier- und Nickbewegungen dieser.
- Fig. 4: eine schematische Draufsicht einer als gezogene Maschine ausgeführten landwirtschaftlichen Verteilmaschine mit einer Verteilvorrichtung, welche eine weitgehend parallele Ausrichtung zu einer Randstruktur aufweist.
- Fig. 5: eine schematische Draufsicht einer als gezogene Maschine ausgeführten landwirtschaftlichen Verteilmaschine mit einer Verteilvorrichtung mit zwei Gestängesegmenten, welche jeweils eine weitgehend parallele bzw. rechtwinkelige Ausrichtung zu einer Randstruktur aufweisen.
- Fig. 6: ein Blockschaltbild einer möglichen Wirkkette der Steuerung und/oder Regelung der landwirtschaftlichen Verteilmaschine.

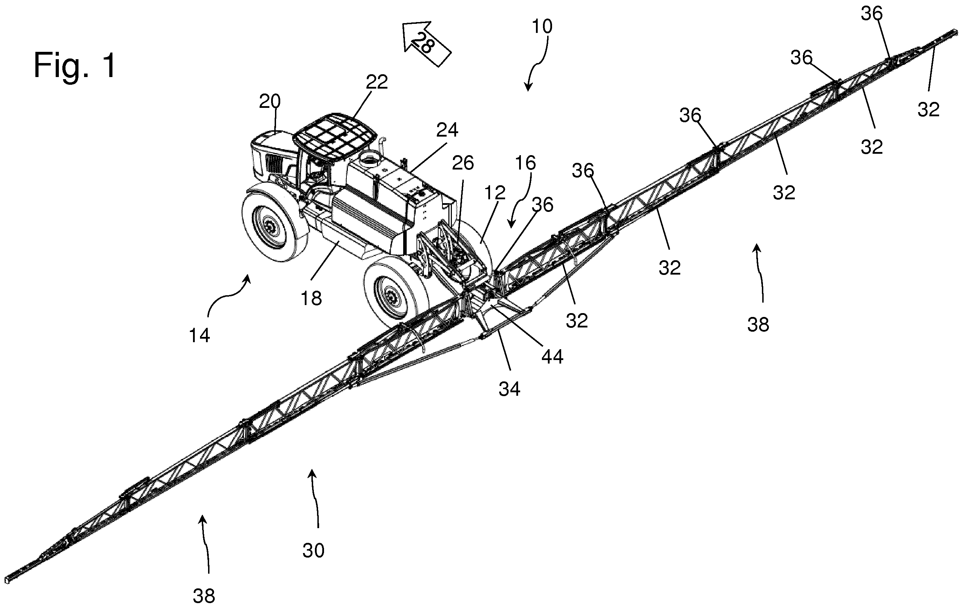

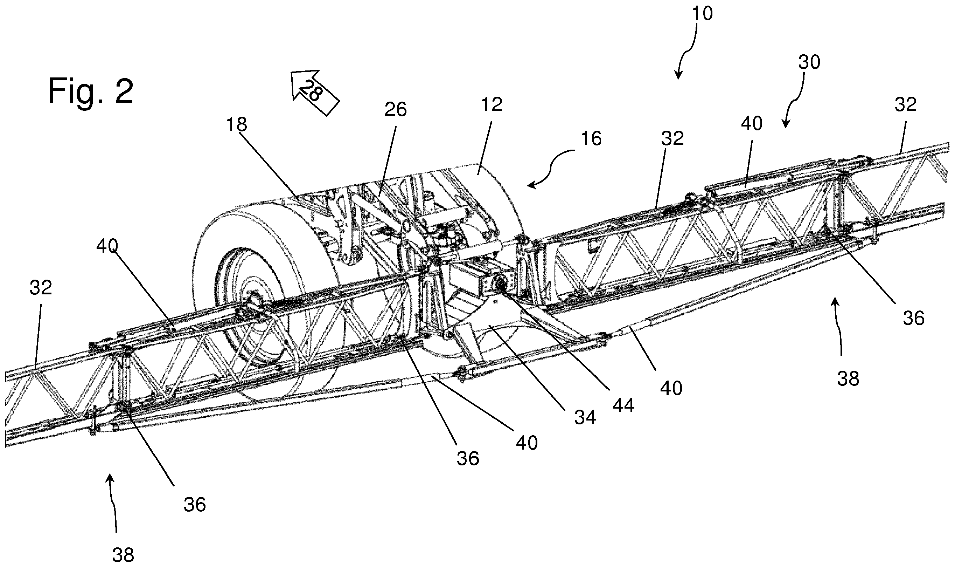

Für gleiche oder gleich wirkende Elemente der Erfindung werden in den Figuren 1 bis 6 jeweils identische Bezugszeichen verwendet. Ferner werden der besseren Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße landwirtschaftliche Verteilmaschine oder das erfindungsgemäße Verfahren ausgestaltet sein können und stellen keine abschließende Begrenzung dar.

Eine Ausführungsvariante einer erfindungsgemäßen landwirtschaftlichen Verteilmaschine 10 geht aus den Figuren 1 bis 3 hervor. Die hierbei gezeigte Verteilmaschine 10 ist als selbstfahrende Maschine ausgeführt, wobei die Erfindung ebenso bei gezogenen oder autonomen Maschinen verwendet bzw. eingesetzt werden kann. Die Verteilmaschine 10 umfasst vier die Verteilmaschine 10 tragende Räder 12, wobei jeweils zwei gegenüberliegende Räder 12 ein Fahrwerk bzw. eine Achse bilden und wobei zumindest die Räder 12 der vorderen Achse 14 oder nur die Räder 12 der hinteren Achse 16 oder die Räder 12 beider Achsen 14; 16 jeweils bspw. um aufrechte Achsen schwenkbar bzw. lenkbar zum Rahmen 18 angeordnet sind. Die Achsen 14; 16 sind zudem an einem die Komponenten der Verteilmaschine 10 tragenden Rahmen 18 montiert. Zudem umfasst die Verteilmaschine 10 einen die Verteilmaschine 10 antreibenden Motor 20 eine Kabine 22 und einen Vorratsbehälter 24 zum Mitführen und Bereitstellen der jeweiligen Flüssigkeit und/oder der körnigen oder granulierten Stoffe oder deren Gemische.

Am hinteren Ende ist dem Rahmen 18 ein mittels Aktoren in dessen Höhe in Bezug auf den Rahmen 18 verstellbares Parallelogramm 26 zugeordnet, an welches eine sich quer zur Fahrtrichtung 28 erstreckende Verteilvorrichtung 30 anschließt. Es sei hierbei nochmals darauf hingewiesen, dass die Ausführungsform mittels Parallelogramm 26 nur eine Anbaumöglichkeit der Verteilvorrichtung 30 darstellt. Ebenso wäre es auch denkbar, diese direkt am Rahmen 18 anzubringen. Der Einfachheit halber wird nachfolgend jedoch die Anbringung der Verteilvorrichtung 30 jeweils auf den Rahmen bezogen, wobei dadurch jedoch eine Verbindung mittels eines Parallelogramms 26 oder einem anderen Zwischensegment oder Zwischenrahmen nicht ausgeschlossen ist, sondern sich die Bezeichnung Rahmen in Verbindung mit der Anbringung der Verteilvorrichtung 30 gleichermaßen auch auf derartige Ausführungsformen bezieht.

Die Verteilvorrichtung ist in mehrere Gestängesegmente 32 unterteilt und besteht aus einem Mittelteil 34 und jeweils links und rechts an diesem über aufrechte Achsen 36 schwenkbar angebauten Seitenteilen 38, wobei ebenso die Seitenteile 38 wiederum aus mehreren ebenfalls mittels aufrechter Achsen 36 schwenkbar zueinander angeordneter Gestängesegmente 32 zusammengesetzt sind. Die gezeigte Verteilmaschine 10 setzt sich bspw. aus insgesamt elf Gestängesegmenten 32 zusammen, welche jeweils um aufrechte Achsen 36 zueinander verschwenkbar sind.

Zudem könnte ebenso die Verteilvorrichtung 30 bzw. dessen Mittelteil 34 um eine aufrechte Achse schwenkbar am Rahmen 18 bzw. am Parallellogramm 26 angebracht sein, wodurch auch die gesamte Verteilvorrichtung 30 entsprechend verschwenkt werden könnte.

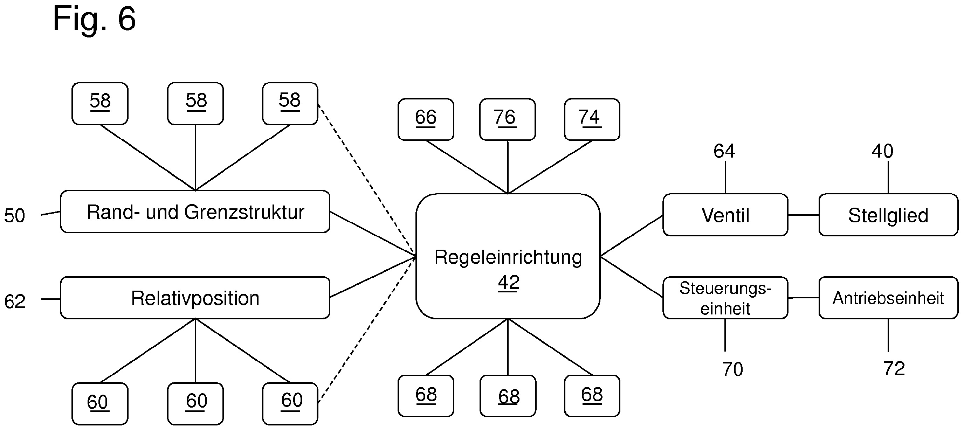

Zum Verschwenken der jeweiligen Gestängesegmente 32 zueinander bzw. der Verteilvorrichtung 30 um die jeweiligen aufrechten Achsen 36 sind an diesen motorische Stellglieder 40 vorgesehen, welche insbesondere von einer elektronischen Regeleinrichtung 42 angesteuert bzw. betätigt werden (vergl. Fig. 6). Bei den Stellgliedern 40 gemäß den Figuren 1 bis 3 handelt es sich jeweils um hydraulisch betriebene Zylinder bzw. Linearantriebe, welche von einem elektrisch betätigten Ventil angesteuert werden. Es wären jedoch auch pneumatische und/oder elektrisch betriebene Stellglieder 40 verwendbar.

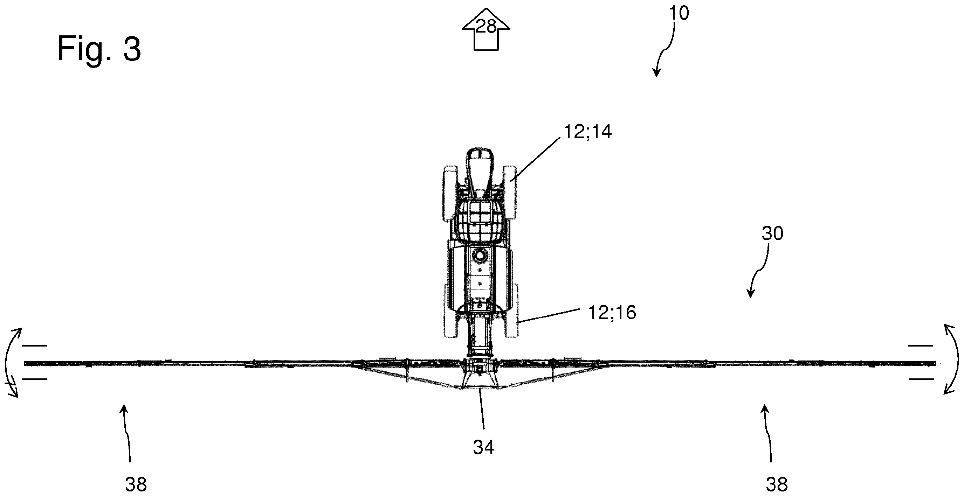

Mittels der vorhandenen motorischen Stellglieder 40 wird den auf die Verteilvorrichtung 30 wirkenden Gier- und Nickbewegungen (vergl. Fig. 3 Pfeile), welche sensorisch erfasst werden, durch eine entsprechende Ansteuerung der Stellglieder 40 entgegen gewirkt. Auch können die motorischen Stellglieder 40 mit Dämpfungsmittel oder dergl. versehen sein, um somit entsprechenden Gier- und Nickbewegungen entgegenzuwirken.

Des Weiteren kann die Verteilvorrichtung 30 um eine in Fahrtrichtung 28 verlaufende Drehachse 44 mittels zumindest eines Antriebselements 46 entsprechend einer Bodenkontur wiederum verschwenkt werden, um somit eine möglichst exakte Anpassung an die jeweilige Bodenkontur bzw. den jeweiligen Horizont zu erreichen bzw. um möglichst gleiche Abstände zwischen der Verteilvorrichtung 30 und der Bodenkontur bzw. zu einem Pflanzenbestand zu erreichen.

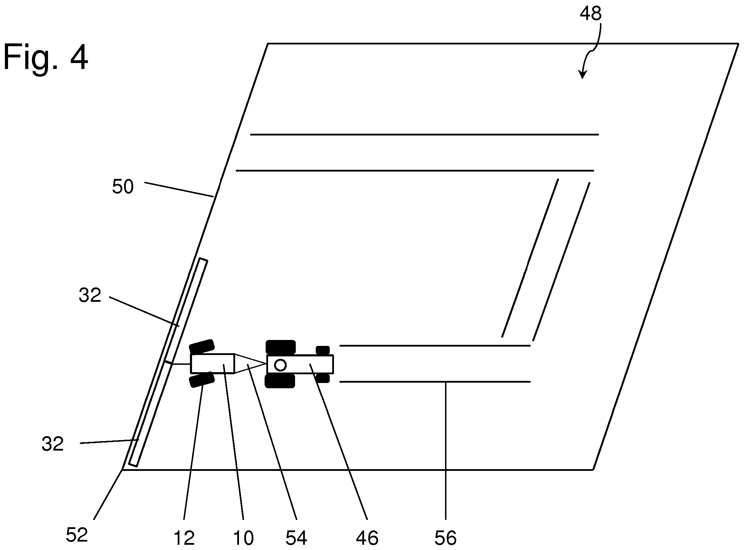

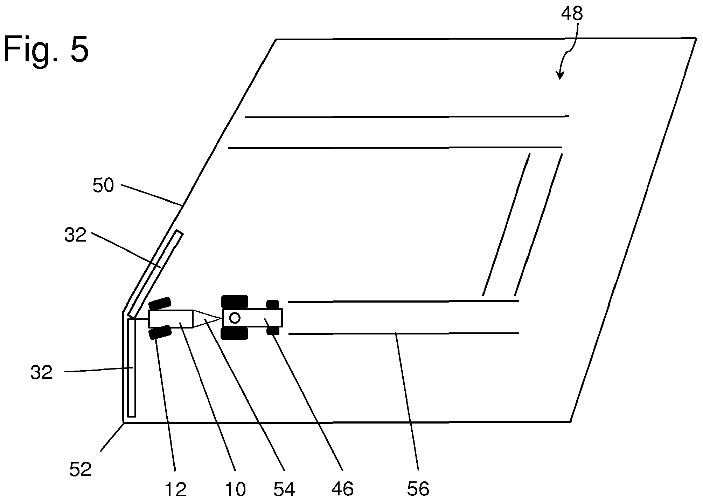

Weitere Details der Erfindung gehen aus den schematischen Draufsichten der Figuren 4 und 5 hervor. Die hierbei gezeigte landwirtschaftliche Verteilmaschine 10 ist als mittels eines Zugfahrzeugs 46 gezogene landwirtschaftliche Verteilmaschine 10 ausgeführt, wobei auch hierbei wiederum angemerkt sei, dass die Erfindung ebenso bei selbstfahrenden oder autonomen Maschinen verwendet bzw. eingesetzt werden kann. Die Verteilmaschine 10 wird mittels eines Zugfahrzeuges 46 über eine Ackerfläche 48 bewegt. Die Ackerfläche 48 weist eine sich aus mehreren Seiten zusammengesetzte Randstruktur 50 auf, welche Randstruktur 50 zudem mehre Ecken 52 mit verschiedenen Winkel zueinander beinhaltet. Die Verbindung zwischen der Verteilmaschine 10 und dem Zugfahrzeug erfolgt mittels einer Zugvorrichtung bzw. einer Zugdeichsel 54. Ebenso wären auch Randstrukturen denkbar, welche Kurven aufweisen bzw. Randstrukturen, welche Ecken 52 und Kurven aufweisen.

Die Verteilmaschine 10 weist zudem wiederum eine Achse bzw. ein Fahrwerk mit zwei jeweils lenkbaren Rädern 12 auf, welche Räder 12 mittels eines motorischen Stellgliedes 40 verschwenkt bzw. gelenkt werden können. Es sei hierzu angemerkt, dass neben einer Lenkung der Räder 12 es ebenso denkbar wäre, die Verteilmaschine 10 mittels einer verschwenkbaren Zugvorrichtung 54 zu lenken oder auch die Verteilmaschine 10 sowohl mittels der Räder 12 als auch mittels der Zugvorrichtung 54 zu lenken. Die landwirtschaftliche Verteilmaschine 10 wird mittels des Zugfahrzeuges 46 entlang von Fahrspuren 56 geführt. Bei den Fahrspuren 56 kann es sich bspw. um sog. Fahrgassen handeln. Es wären jedoch auch andere Fahrspuren 56 denkbar. Insbesondere können die jeweiligen Fahrspuren 56 mittels Spurermittlungseinrichtungen 74 erfasst und/oder ausgewertet werden. Bspw. könnten diese bzw. die Fahrspuren auch in der Regeleinrichtung 42 hinterlegt sein oder es könnten entsprechende Daten mittels der Regeleinrichtung 42 von einer Datenbank abgerufen werden.

Um in Abhängigkeit der jeweiligen Fahrspuren 56 und der jeweils vorhandenen Randstrukturen 50 eine möglichst ganzflächige Behandlung der Ackerfläche 48 zu erreichen, ist vorgesehen, dass die jeweilige Randstruktur 50 mittels verschiedenster Konturermittlungseinrichtungen 58 wie bspw. einem Laserscanner und/oder einer Kamera und/oder mittels eines GPS-System und/oder mittels Radarsensoren oder dergl. erfasst wird und an die Regeleinrichtung 42 entsprechend übermittelt wird bzw. an der Verteilmaschine 10 angebaut sind oder mit der Regeleinrichtung 42 in Verbindung stehen. Auch können die jeweiligen Randstrukturen 50 aus einer Datenbank mittels der Regeleinrichtung 42 entsprechend abgerufen oder ausgelesen werden.

Zudem sind an der Verteilvorrichtung 30 und/oder an den jeweiligen Gestängesegmenten 32 und/oder an den jeweils lenkbaren Räder 12 und/oder der lenkbaren Zugdeichsel 54 und/oder den Stellglieder 40 bzw. an den aufrechten Achsen 36 Sensoren 60 derartig angebracht, dass mittels dieser die aktuelle Ausrichtung bzw. Relativposition 62 ermittelt wird. Mittels der Regeleinrichtung 42 kann somit durch ein entsprechendes Steuerungsprogramm jeweils eine Ausrichtung der Verteilvorrichtung 30 oder eine Ausrichtung von deren Gestängesegmenten 32 in Bezug auf die Randstruktur 50 berechnet werden und anschließend das jeweilige motorische Stellglied 40 bzw. ein diesem zugeordnetes Ventil 64 entsprechend angesteuert werden und somit die Verteilmaschine 10 bzw. dessen Verteilvorrichtung 30 oder dessen Gestängesegmente 32 in eine gewünschte Position bewegt werden.

Um eine zumindest weitgehend parallele und/oder rechtwinkelige Ausrichtung der Verteilvorrichtung 30 bzw. der jeweiligen Gestängesegmente 32 zu erreichen, werden bzw. wird auf Basis des Steuerungsprogramms das jeweilige motorische Stellglied 40 entsprechend angesteuert und die Verteilvorrichtung 30 und/oder die Gestängesegmente 32 entsprechend verschwenkt. Auch kann die Verteilmaschine 10 mittels der Zugdeichsel 54 bzw. mittels der Räder 12 entsprechend gelenkt werden, um mittels der Verteilvorrichtung 30 bzw. mittels der Gestängesegmente 32 eine zumindest weitgehend parallele und/oder rechtwinkelige Ausrichtung zur vorhandenen Randstruktur 50 zu erreichen. Auch könnten sowohl die Verteilmaschine 10 entsprechend gelenkt als auch die Verteilvorrichtung 30 und/oder die Gestängesegmente 32 entsprechend verschwenkt werden.

So wurde gemäß der Fig. 4 die gesamte Verteilvorrichtung 30 derartig verschwenkt, dass diese eine zumindest weitgehend parallele Ausrichtung zu Randstruktur 50 aufweist, wohingegen gemäß der Fig. 5 die Verteilvorrichtung 30 bzw. deren Gestängesegmente 32 derartig verschwenkt wurden, dass ein Gestängesegment 32 eine weitgehend parallele Ausrichtung zu einer Randstruktur 50 aufweist, sowie dass ein Gestängesegment 32 eine weitegehend parallele und rechtwinkelige Ausrichtung zu einer Randstruktur 50 aufweist.

Die Verteilmaschine 10 kann jeweils entlang einer definierbaren bzw. einer definierten Fahrspur 56 geführt werden, was bedeutet das deren Räder 12 und/oder deren Zugvorrichtung 54 derartig gelenkt werden, dass diese der Fahrspur 56 folgen. So können zur Erfassung und/oder Auswertung dieser Fahrspur 56 der Verteilmaschine 10 zugeordnet und/oder mit einer Regeleinrichtung 42 in Verbindung stehend Spurermittlungseinrichtungen 74 vorgesehen sein. So könnte eine Ansteuerung der Stellglieder 40 auch derartig erfolgen, dass die Verteilmaschine 10 jeweils den Fahrspuren 56 folgt, die Verteilvorrichtung 30 oder deren Gestängesegmente 32 hingegen jeweils auf Basis der vorhanden Randstruktur 10 entsprechend verschwenkt werden, so dass die Verteilvorrichtung 30 oder deren Gestängesegmente 32 der Randstruktur 50 parallel und/oder rechtwinkelig folgen.

Weitere Details der Ansteuerung des oder der motorischen Stellglieder 40 gehen aus dem Blockschaltbild der Fig. 6 hervor. Zur Erfassung einer Randstruktur 50 bzw. einer Grenzstruktur sind an der Verteilmaschine 10 bzw. mit der Regeleinrichtung 42 in Verbindung stehenden Konturermittlungseinrichtungen 58 vorgesehen. Die Konturermittlungseinrichtungen 58 können die jeweilige Randstruktur 50 entsprechend erfassen und/oder auswerten und an die Regeleinrichtung 42 übermitteln. Die Konturermittlungseinrichtungen 58 könnten jedoch auch nur Signale an die Regeleinrichtung 42 übermitteln. Anschließend könnte mittels eines in der Regeleinrichtung 42 hinterlegten Steuerungsprogramms eine Randstruktur 50 entsprechend generiert bzw. ausgewertet werden. Auch könnte die Konturermittlungseinrichtung 58 eine Datenbank sein bzw. könnten diese mit einer Datenbank in Verbindung stehen.

Zudem sind zur Erfassung einer Relativposition 62 der Verteilvorrichtung 30 und/oder der Gestängesegmente 32 bzw. der Ausrichtung der Räder 12 und/oder der Zugvorrichtung 54 Sensoren 60 vorgesehen bspw. an der Verteilmaschine 10 und/oder an den aufrechten Achsen 36 und/oder den Stellgliedern 40. Bei den Sensoren 60 kann es sich insbesondere um jegliche Art von Positionssensoren handeln, bspw. um Winkelpotentiometer oder Winkelsensoren oder dergl. Die Sensoren 60 können die jeweilige Relativposition 62 entsprechend erfassen und an die Regeleinrichtung 42 übermitteln. Die Sensoren 60 könnten jedoch auch nur Signale an die Regeleinrichtung 42 übermitteln. Die entsprechenden Signale können anschließend mittels eines in der Regeleinrichtung 42 hinterlegten Steuerungsprogramms in entsprechende Werte der Relativpositionen 62 umgewandelt werden.

Neben der Randstruktur 50 und der Relativposition 62 können in die Regeleinrichtung 42 noch weitere Angaben eingegeben, bzw. von dieser verarbeitet werden. So wäre es denkbar, dass mittels zusätzlicher Messmittel 66 verschiedenste Parameter 76 wie bspw. die aktuellen Fahrbewegungen 68 erfasst werden. Bei den Fahrbewegungen 68 kann bspw. erfasst werden, ob die Verteilmaschine 10 oder dessen Zugfahrzeug 46 sich vorwärts- oder rückwärts bewegt oder mit welcher Geschwindigkeit die Verteilmaschine 10 oder dessen Zugfahrzeug 46 bewegt wird. Auch könnte erfasst werden, ob die Verteilmaschine 10 oder dessen Zugfahrzeug 46 beschleunigt oder verzögert wird.

Auch könnten bspw. die Fahrspuren 56 mittels zusätzlicher Messmittel 66 bzw. mittels Spurermittlungseinrichtungen 74 erfasst und/oder ausgewertet werden. Die Fahrspuren 56 könnten jedoch auch mittels eines GPS-System an die Regeleinrichtung 42 übermittelt werden. Ebenso könnten die Fahrspuren 56 in einer mit der Regeleinrichtung 42 in Verbindung stehenden Datenbank hinterlegt sein.

Des Weiteren könnten weitere Messmittel 66 zur Ermittlung der Ausrichtung der Verteilmaschine 10 vorgesehen sein, bspw. Beschleunigungssensoren oder Drehratensensoren oder Gyroskope oder Positionssensoren oder dergl.

Auf Basis der jeweiligen Randstruktur 50 und der Relativposition 62 wird anschließend mittels der Regeleinrichtung 42 ein zum jeweiligen motorischen Stellglied 40 zugehöriges Ventil 64 angesteuert, welches anschließend das Stellglied 40 derartig ansteuert, dass die Verteilvorrichtung 30 bzw. die Gestängesegmente 32 bzw. die Verteilmaschine 10 eine jeweils gewünschte Position einnehmen.

Zudem könnte vorgesehen sein, dass darüber hinaus bspw. eine weitere Steuerungseinheit 70 und eine Antriebseinheit 72 der Verteilmaschine 10 angesteuert werden und somit auch die Fahrbewegungen der Verteilmaschine 10 wiederum in Abhängigkeit der Relativposition 62 und der Randstruktur 50 sowie bspw. auch der Fahrspuren 56 entsprechend gesteuert bzw. geregelt werden. Somit kann insbesondere erreicht werden, dass bei einer Verteilmaschine 10 sowohl deren Verteilvorrichtung 10 als auch deren Fahrbewegungen weitgehend autonom und ohne Einwirkung einer Bedienperson durchgeführt werden.

Um eine jeweils möglichst exakte Ausrichtung der Gestängesegmente 32 bzw. der Verteilvorrichtung 30 zu erreichen, ist in der Regeleinrichtung 42 ein Steuerungsprogramm hinterlegt, welches unter Berücksichtigung der erfassten Istwerte der Ausrichtung bzw. der Relativposition und der erfassten bzw. vorhandenen Randstruktur 50, eine Berechnung zur Ansteuerung des motorischen Stellglieds 40 erstellt, wobei mittels des Steuerungsprogramms hierfür auch entsprechende Verfahrgeschwindigkeiten des Stellgliedes 40 definiert werden können. Die Verfahrgeschwindigkeiten könnten zudem unter Berücksichtigung und Verarbeitung verschiedenster Parameter 76 wie bspw. von aktuellen Fahrbewegungen 68 der Verteilmaschine 10 noch weiter präzisiert werden, d.h. je größer die Fahrgeschwindigkeit der Verteilmaschine 10, desto schneller die Verfahrgeschwindigkeit des zumindest einen motorischen Stellglieds 40.

Die Verfahrgeschwindigkeiten könnten jedoch auch auf Basis von verschiedenen anderen Parametern 76 erfolgen, so dass wiederum durch ein zu schnelles oder zu langsames verschwenken Doppelbehandlungen und/oder Unterbehandlungen vermieden werden können. So kann die Verfahrgeschwindigkeit bspw. auf Basis der Fahrgeschwindigkeit der Verteilmaschine 10 und/oder auf Basis der Ausbringmenge und/oder auf Basis der Wegstrecke und/oder auf Basis der jeweils erfassten Relativpositionen erfolgen. Auch diese Parameter 76 können bspw. wieder mittels verschiedenster Messmittel 66 erfasst und mittels des in der Regeleinrichtung 42 hinterlegten Steuerungsprogramms verarbeitet werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Landwirtschaftliche Verteilmaschine
- 12: Räder
- 14: vordere Achse
- 16: hinter Achse
- 18: Rahmen
- 20: Motor
- 22: Kabine
- 24: Vorratsbehälter
- 26: Parallellogrammführung
- 28: Fahrtrichtung
- 30: Verteilvorrichtung
- 32: Gestängesegment
- 34: Mittelteil
- 36: aufrechte Achse
- 38: Seitenteil
- 40: Stellglied
- 42: Regeleinrichtung
- 44: Drehachse
- 46: Zugfahrzeug
- 48: Ackerfläche
- 50: Randstruktur
- 52: Ecke
- 54: Zugdeichsel; Zugvorrichtung
- 56: Fahrspur
- 58: Konturermittlungseinrichtung
- 60: Sensoren
- 62: Relativposition
- 64: Ventil
- 66: Messmittel
- 68: Fahrbewegungen
- 70: Steuerungseinheit
- 72: Antriebseinheit
- 74: Spurermittlungseinrichtung
- 76: Parameter

## Patentansprüche

1. Landwirtschaftliche Verteilmaschine (10) mit zumindest einem Rahmen (18), einem Vorratsbehälter (24) oder mehreren Vorratsbehältern (24) sowie einer Verteilvorrichtung (30) zum Ausbringen von Flüssigkeiten und/oder körnigen oder granulierten Stoffen, wobei die Verteilvorrichtung (30) beweglich am Rahmen (18) angeordnet, und wobei die Verteilvorrichtung (30) in mehrere Gestängesegmente (32) unterteilt ist, welche über aufrechte Achsen (36) verschwenkbar zueinander und/oder zum Rahmen (18) angeordnet sind,
- wobei zum Verschwenken der Verteilvorrichtung (30) und/oder der Gestängesegmente (32) der Verteilvorrichtung (30) zumindest ein von einer elektronischen Regeleinrichtung (42) ansteuerbares motorisches Stellglied (40) vorgesehen ist,
- wobei den Gestängesegmenten (32) und/oder den aufrechten Achsen (36) und/oder der Verteilvorrichtung (30) und/oder dem zumindest einen motorischen Stellglied (40) Sensoren (60) zu Erfassung und Weiterleitung eines Istwertes bzgl. der Ausrichtung der Verteilvorrichtung (30) und/oder der Gestängesegmente (32) und/oder der aufrechten Achsen (36) und/oder des zumindest einen motorischen Stellgliedes (40) zugeordnet ist,
**dadurch gekennzeichnet, dass** eine Verfahrgeschwindigkeit des zumindest einen Stellgliedes (40) in Abhängigkeit von sensorisch erfassten Parametern (76) erfolgt bzw. gesteuert wird, wobei das mindestens eine motorische Stellglied (40) in einer Weise angesteuert wird, dass auf die Verteilvorrichtung (30) wirkenden Gier- und Nickbewegungen entgegengewirkt wird.

2. Landwirtschaftliche Verteilmaschine nach Anspruch 1, **dadurch gekennzeichnet, dass** als Parameter (76) eine Ausbringmenge an Flüssigkeit und/oder körnigen oder granulierten Stoffen und/oder eine Fahrgeschwindigkeit der Verteilmaschine (10) und/oder eine definierte zurückgelegte Wegstrecke erfassbar ist.

3. Landwirtschaftliche Verteilmaschine nach Anspruch 1 oder 2, **dadurch gekennzeichnet, dass** als Parameter (76) ein Lenkwinkel eines der Verteilmaschine (10) zugeordneten Fahrwerkes erfassbar ist.

4. Landwirtschaftliche Verteilmaschine nach einem der vorhergehenden Ansprüche, **dadurch gekennzeichnet, dass** mittels eines in einer Regeleinrichtung (42) hinterlegten Steuerungsprogramms unter Berücksichtigung der erfassten Parameter (76) und der erfassten Ausrichtung eine Verfahrgeschwindigkeit des zumindest einen Stellglieds (40) definierbar ist.

5. Landwirtschaftliche Verteilmaschine nach einem der vorhergehenden Ansprüche, **dadurch gekennzeichnet, dass** zur Erfassung und/oder Auswertung einer Randstruktur (50) einer von der landwirtschaftlichen Verteilmaschine (10) zu bearbeitenden und/oder zu überfahrenden Fläche der Verteilmaschine (10) zugeordnet und/oder mit der Regeleinrichtung (42) in Verbindung stehend Konturermittlungseinrichtungen vorgesehen sind und eine Ansteuerung des zumindest einen Stellgliedes (40) in Abhängigkeit von einer erfassten Ausrichtung einer vorhandenen Randstruktur (50) und der erfassten Parameter (76) erfolgt.

6. Verfahren zur Steuerung und/oder Regelung einer Verteilmaschine (10) mit zumindest einen Rahmen (18), einem Vorratsbehälter (24) oder mehreren Vorratsbehältern (24) und einer Verteilvorrichtung (30) zum Ausbringen von Flüssigkeiten und/oder körnigen oder granulierten Stoffen, wobei die Verteilvorrichtung (30) beweglich am Rahmen (18) angeordnet und in mehrere Gestängesegmente (32) unterteilt ist, welche über aufrechte Achsen (36) verschwenkbar zueinander und/oder zum Rahmen (18) angeordnet sind, wobei zum Verschwenken zumindest ein von einer elektronischen Regeleinrichtung (42) ansteuerbares motorisches Stellglied (40) vorgesehen ist,
**gekennzeichnet durch** die Verfahrensschritte:
- Erfassung und Weiterleitung eines Istwertes bzgl. der Ausrichtung der Verteilvorrichtung (30) und/oder der Gestängesegmente (32) mittels diesen und/oder den aufrechten Achsen und/oder dem zumindest einen motorischen Stellglied (40) zugeordneter Sensoren (60),
- Sensorische Erfassung von Ausbring- und/oder Fahrbewegungsparametern (76),
- Ansteuerung des zumindest einen motorischen Stellgliedes (40) in Abhängigkeit von der Ausrichtung und der Parameter (76),
- wobei das mindestens eine motorische Stellglied (40) in einer Weise angesteuert wird, dass auf die Verteilvorrichtung (30) wirkenden Gier- und Nickbewegungen entgegengewirkt wird.

7. Verfahren nach Anspruch 6, **dadurch gekennzeichnet, dass** als Ausbringparameter (76) eine Ausbringmenge und/oder ein Spritzdruck erfasst werden.

8. Verfahren nach Anspruch 6 oder 7, **dadurch gekennzeichnet, dass** als Fahrbewegungsparameter (76) ein Lenkwinkel eines der Verteilmaschine (10) zugeordneten Fahrwerks und/oder einer Zugdeichsel erfasst wird und/oder eine Fahrgeschwindigkeit und/oder eine Wegstrecke erfasst wird.

9. Verfahren nach einem der Ansprüche 6 bis 8, **dadurch gekennzeichnet, dass** mittels eines in einer Regeleinrichtung (42) hinterlegten Steuerungsprogramms unter Berücksichtigung der erfassten Parameter (76) und der erfassten Ausrichtung eine Verfahrgeschwindigkeit des zumindest einem Stellglieds (40) definiert wird.

10. Verfahren nach einem der Ansprüche 6 bis 9, **dadurch gekennzeichnet, dass** zur Erfassung und/oder zur Auswertung einer Randstruktur (50) einer von der landwirtschaftlichen Verteilmaschine (10) zu bearbeitenden und/oder zu überfahrenden Fläche der Verteilmaschine (10) zugeordnet und/oder mit der Regeleinrichtung (42) in Verbindung stehend Konturermittlungseinrichtungen vorgesehen sind, und dass eine Ansteuerung des zumindest einen Stellglieds (40) in Abhängigkeit von einer erfassten Ausrichtung, einer vorhanden Randstruktur und der erfassten Parameter (76) erfolgt.

## Claims

1. An agricultural distribution machine (10), with at least one frame (18), one storage hopper (24) or a plurality of storage hoppers (24), as well as with a distribution apparatus (30) for spreading liquids and/or granular or granulated materials, wherein the distribution apparatus (30) is arranged to be movable on the frame (18) and wherein the distribution apparatus (30) is subdivided into a plurality of linkage segments (32), which are arranged to be pivotable relative to one another and/or relative to the frame (18) via upright axles (36),
- wherein at least one motorised actuator (40) that is activable by an electronic adjustment device (42) is provided for the pivoting of the distribution apparatus (30) and/or of the linkage segments (32) of the distribution apparatus (30),
- wherein sensors (60) for the detection and transmission of an actual value regarding the alignment of the distribution apparatus (30) and/or of the linkage segments (32) and/or of the upright axles (36) and/or of the at least one motorised actuator (40) are assigned to the linkage segments (32) and/or to the upright axles (36) and/or to the distribution apparatus (30) and/or to the at least one motorised actuator (40),
**characterised in that** a movement speed of the at least one actuator (40) is carried out or controlled based on sensor-detected parameters (76), wherein the at least one motorised actuator (40) is activated in such a manner that yaw and pitch movements acting upon the distribution apparatus (30) are counteracted.

2. The agricultural distribution machine according to claim 1, **characterised in that** a spreading quantity of liquid and/or granular or granulated materials and/or a driving speed of the distribution machine (10) and/or a defined distance covered is detectable as a parameter (76).

3. The agricultural distribution machine according to claim 1 or 2, **characterised in that** a steering angle of a carriage assigned to the distribution machine (10) is detectable as a parameter (76).

4. The agricultural distribution machine according to one of the previous claims, **characterised in that** a movement speed of the at least one actuator (40) is definable in consideration of the detected parameters (76) and the detected alignment by means of a control program (42) stored in an adjustment device (42).

5. The agricultural distribution machine according to one of the previous claims, **characterised in that** contour detection devices assigned to the distribution machine (10) and in communication with the adjustment device (42) are provided for the detection and/or evaluation of a boundary structure (50) of an area to be tilled and/or traversed by the agricultural distribution machine (10), and **characterised in that** an activation of the at least one actuator (40) is carried out based on a detected alignment, on a present boundary structure (50) and on the detected parameters (76).

6. A method for the control and/or adjustment of a distribution machine (10), with at least one frame (18), one storage hopper (24) or a plurality of storage hoppers, and a distribution apparatus (30) for spreading liquids and/or granular or granulated materials, wherein the distribution apparatus (30) is arranged to be movable on the frame (18) and is subdivided into a plurality of linkage segments (32), which are arranged to be pivotable relative to one another and/or relative to the frame (18) via upright axles (36), wherein at least one motorised actuator (40) that is activable by an electronic adjustment device (42) is provided for the pivoting,
**characterised by** the method steps:
- detection and transmission of an actual value regarding the alignment of the distribution apparatus (30) and/or the alignment of the linkage segments (32) by means of sensors (60) assigned thereto and/or assigned to the upright axles and/or to the at least one motorised actuator (40),
- sensor detection of spread parameters (76) and/or of driving movement parameters (76),
- activation of the at least one motorised actuator (40) based on the alignment and on the parameters (76),
wherein the at least one motorised actuator (40) is activated in such a manner that yaw and pitch movements acting upon the distribution apparatus (30) are counteracted.

7. The method according to claim 6, **characterised in that** a spreading quantity and/or a spray pressure are detected as spread parameters (76).

8. The method according to claim 6 or 7, **characterised in that** a steering angle of a carriage assigned to the distribution machine (10) and/or of a drawbar is detected and/or a driving speed and/or a distance is detected as driving movement parameter (76).

9. The method according to one of the claims 6 to 8, **characterised in that** a movement speed of the at least one actuator (40) is defined in consideration of the detected parameters (76) and the detected alignment by means of a control program (42) stored in an adjustment device (42).

10. The method according to one of the claims 6 to 9, **characterised in that** contour detection devices assigned to the distribution machine (10) and in communication with the adjustment device (42) are provided for the detection and/or for the evaluation of a boundary structure (50) of an area to be tilled and/or traversed by the agricultural distribution machine (10), and **characterised in that** an activation of the at least one actuator (40) is carried out based on a detected alignment, on a present boundary structure (50) and on the detected parameters (76).

## Revendications

1. Machine d'épandage agricole (10) avec au moins un cadre (18), un réservoir (24) ou plusieurs réservoirs (24) ainsi qu'avec un dispositif d'épandage (30) destiné à épandre des liquides et/ou des substances granuleuses ou granulées, dans laquelle ledit dispositif d'épandage (30) est disposé de manière mobile sur le cadre (18), et dans lequel le dispositif d'épandage (30) est divisé en plusieurs segments de tringlerie (32) qui sont agencés de manière à pouvoir pivoter les uns par rapport aux autres et/ou par rapport au cadre (18) par l'intermédiaire d'axes verticaux (36),
- dans laquelle au moins un actionneur moteur (40) apte à être commandé par un dispositif électronique de réglage (42) est prévu pour faire pivoter le dispositif d'épandage (30) et/ou les segments de tringlerie (32) du dispositif d'épandage (30),
- dans laquelle des capteurs (60) destinés à détecter et à transmettre une valeur réelle concernant l'orientation du dispositif d'épandage (30) et/ou des segments de tringlerie (32) et/ou des axes verticaux (36) et/ou dudit au moins un actionneur moteur (40) sont associés aux segments de tringlerie (32) et/ou aux axes verticaux (36) et/ou au dispositif d'épandage (30) et/ou audit au moins un actionneur moteur (40),
**caractérisée par le fait qu'**une vitesse de déplacement dudit au moins un actionneur (40) a lieu ou bien est commandée en fonction de paramètres (76) détectés par capteur, dans laquelle ledit au moins un actionneur moteur (40) est commandé de manière à contrecarrer des mouvements de lacet et de tangage agissant sur le dispositif d'épandage (30).

2. Machine d'épandage agricole selon la revendication 1, **caractérisée par le fait qu'**une quantité d'épandage de liquide et/ou de substances granuleuses ou granulées et/ou une vitesse de déplacement de la machine d'épandage (10) et/ou une distance parcourue définie peuvent être détectées en tant que paramètre (76).

3. Machine d'épandage agricole selon la revendication 1 ou 2, **caractérisée par le fait qu'**un angle de braquage d'un châssis associé à la machine d'épandage (10) peut être détecté en tant que paramètre (76).

4. Machine d'épandage agricole selon l'une quelconque des revendications précédentes, **caractérisée par le fait qu'**une vitesse de déplacement dudit au moins un actionneur (40) peut être définie au moyen d'un programme de commande stocké dans un dispositif de réglage (42), en prenant en compte les paramètres (76) détectés et l'orientation détectée.

5. Machine d'épandage agricole selon l'une quelconque des revendications précédentes, **caractérisée par le fait que**, pour détecter et/ou évaluer une structure de bord (50) d'une surface à traiter et/ou à parcourir par la machine d'épandage agricole (10), des dispositifs de détermination de contour (58) qui sont associés à la machine d'épandage (10) et/ou sont en communication avec ledit dispositif de réglage (42) sont prévus, et ledit au moins un actionneur (40) est commandé en fonction d'une orientation détectée, d'une structure de bord (50) existante et des paramètres (76) détectés.

6. Procédé de commande et/ou de réglage d'une machine d'épandage (10) avec au moins un cadre (18), un réservoir (24) ou plusieurs réservoirs (24) ainsi qu'avec un dispositif d'épandage (30) destiné à épandre des liquides et/ou des substances granuleuses ou granulées, dans lequel ledit dispositif d'épandage (30) est disposé de manière mobile sur le cadre (18) et est divisé en plusieurs segments de tringlerie (32) qui sont agencés de manière à pouvoir pivoter les uns par rapport aux autres et/ou par rapport au cadre (18) par l'intermédiaire d'axes verticaux (36), dans lequel au moins un actionneur moteur (40) apte à être commandé par un dispositif électronique de réglage (42) est prévu pour le pivotement,
**caractérisé par** les étapes de procédé consistant à:
- détecter et transmettre une valeur réelle concernant l'orientation du dispositif d'épandage (30) et/ou des segments de tringlerie (32) au moyen de capteurs (60) associés à ceux-ci et/ou aux axes verticaux et/ou audit au moins un actionneur moteur (40),
- détecter par capteur des paramètres d'épandage et/ou de déplacement (76),
- commander ledit au moins un actionneur moteur (40) en fonction de l'orientation et des paramètres (76),
- dans lequel ledit au moins un actionneur moteur (40) est commandé de manière à contrecarrer des mouvements de lacet et de tangage agissant sur le dispositif d'épandage (30).

7. Procédé selon la revendication 6, **caractérisé par le fait qu'**une quantité d'épandage et/ou une pression de pulvérisation sont détectées en tant que paramètres d'épandage (76).

8. Procédé selon la revendication 6 ou 7, **caractérisé par le fait qu'**un angle de braquage d'un châssis associé à la machine d'épandage (10) et/ou d'une flèche d'attelage et/ou une vitesse de déplacement et/ou une distance est détecté(e) en tant que paramètre de déplacement (76).

9. Procédé selon l'une quelconque des revendications 6 à 8, **caractérisé par le fait qu'**une vitesse de déplacement dudit au moins un actionneur (40) est définie au moyen d'un programme de commande stocké dans un dispositif de réglage (42), en prenant en compte les paramètres (76) détectés et l'orientation détectée.

10. Procédé selon l'une quelconque des revendications 6 à 9, **caractérisé par le fait que**, pour détecter et/ou évaluer une structure de bord (50) d'une surface à traiter et/ou à parcourir par la machine d'épandage agricole (10), des dispositifs de détermination de contour (58) qui sont associés à la machine d'épandage (10) et/ou sont en communication avec ledit dispositif de réglage (42) sont prévus, et que ledit au moins un actionneur (40) est commandé en fonction d'une orientation détectée, d'une structure de bord (50) existante et des paramètres (76) détectés.
